# EUROPÄISCHE PATENTSCHRIFT

(11) **EP 3 151 502 B1**
(45) Veröffentlichungstag und Bekanntmachung des Hinweises auf die Patenterteilung: **15.08.2018**
(21) Anmeldenummer: 15187286.8
(22) Anmeldetag: 29.09.2015
(51) Int. Cl.: H04L 29/06

(54) **VERSCHIEDENARTIG VERSCHLÜSSELTE ÜBERTRAGUNG VON DATEN EINES OBJEKTES**
VARIOUSLY ENCRYPTED TRANSMISSION OF OBJECT DATA
TRANSMISSION DE DONNEES D'UN OBJET ENCRYPTEES DANS DES MANIERES VARIANTES

(43) Veröffentlichungstag der Anmeldung: 05.04.2017
(73) Patentinhaber: Siemens Aktiengesellschaft, 80333 München (DE)
(72) Erfinder: Verma, Amit, 12439 Berlin (DE)

(56) Entgegenhaltungen:
- WO-A2-2006/015182
- US-A1- 2015 200 919
- RENE HUMMEN ET AL: "A Cloud design for user-controlled storage and processing of sensor data", CLOUD COMPUTING TECHNOLOGY AND SCIENCE (CLOUDCOM), 2012 IEEE 4TH INTERNATIONAL CONFERENCE ON, IEEE, 3. Dezember 2012 (2012-12-03), Seiten 232-240, XP032323255, DOI: 10.1109/CLOUDCOM.2012.6427523 ISBN: 978-1-4673-4511-8
- RIVEST R L ED - PEDRO CAMPOS ET AL: "CRYPTOGRAPHY AND MACHINE LEARNING", CORRECT SYSTEM DESIGN; [LECTURE NOTES IN COMPUTER SCIENCE; LECT.NOTES COMPUTER], SPRINGER INTERNATIONAL PUBLISHING, CHAM, Bd. CONF. 1, 11. November 1991 (1991-11-11), Seiten 427-449, XP000473957, ISSN: 0302-9743 ISBN: 978-3-642-22877-3

## Beschreibung

Die Erfindung betrifft ein System und ein Verfahren zur Übertragung von Daten von Objekten eines Systembetreibers mittels Datensammler und einem Klassifikationsmodul zur Klassifikation der Daten.

Die vorliegende Erfindung ist im Bereich von agentenbasierten Datensammlungen für sog. cloudbasierten Systeme und Dienstleistung angesiedelt. Die Erfindung betrifft weiter den Bereich des sogenannten "Internet of Things (IoT) bzw. des sog. "Web of Systems" (WoS). Bei agentenbasierten Datensammlungen stellen Agenten die Schnittstelle zwischen einer Datenquelle und einem cloudbasierten System dar. Sie sammeln die Daten, nehmen ggf. Vorauswertungen vor und senden die Daten zum System. Das Senden der Daten kann direkt, über Vermittler (sog. Proxies) oder über Gateways erfolgen. Die Datenquelle sind Automatisierungs- oder Rechnereinheiten in einem industriellen Umfeld, insbesondere in einem Automatisierungssystem. Diese Einheiten können speicherprogrammierbare Steuerungen, Feldgeräte mit Controllern wie Motoren, Umrichter, Sensoren aber auch Controller in Autos, Lichtsignalanlagen, Kameras oder dergleichen sein. Die Agenten können reine Softwareagenten sein, die in diesem Falle direkt in den vorgenannten Steuerungen bzw. Controllern integriert sind, deren Rechenkapazität nutzen und dort als Datensammler fungieren. Alternativ kann der Agent auch auf einer eigenen Hardware laufen, die dann die Datenquelle indirekt über Kommunikationsprotokolle (Siemens S7, Profibus, Modbus, OPC DA/UA, SOAP/XML etc.) verbindet. Hinsichtlich der Anforderungen bei der Kopplung der Datenquelle über Agenten können diese in folgende Typen unterteilt werden.

In einem Fall soll der Agent Daten von der Datenquelle sammeln, an das cloudbasierte System schicken und/oder in der Lage sein Steuersignale vom cloudbasierten System an die Datenquelle zu empfangen. Ein Beispiel eines solchen Datensammel- und Steueragenten könnte ein Agent in einem Motor sein, der in einem einfachen Anwendungsfall Daten, beispielsweise Beschleunigungsdaten, von Sensoren im Motor liest und diese Daten zu Analytikzwecken an das cloudbasierte System sendet. Wenn es sich um einen Motor handelt, der für das industrielle Automatisierungssystem aufgrund seiner Funktion exponiert ist und somit überwacht werden muss, könnte das cloudbasierte System nach Auswertung der Daten eine Anomalität feststellen und einen Stoppbefehl an den Agenten senden, welcher dann wiederum ein entsprechendes Signal für den Stopp des Motors an die Steuerung des Motors sendet.
In einem anderen Fall handelt es sich bei dem Agenten um einen passiven Datensammler, der lediglich Daten sammelt und an das cloudbasierte System sendet, welches mit diesen Daten weitere Analytikfunktionen ausführt. Diese Form von Agenten sollen keine Befehle vom cloudbasierten System empfangen.
Typischerweise ist die Kommunikation zwischen Agenten und einem cloudbasierten externen Rechnersystem aus Sicherheitsgründen verschlüsselt. Ein Beispiel dieser Technologie ist aus der Druckschrift US2015/200919-A1 bekannt.

Die Verschlüsselung wird über sichere Kommunikationsprotokolle wie beispielsweise TLS, SSL, HTTPS etc. Dies führt zu den folgenden Problemen.
Auf der einen Seite läuft die Agentensoftware in den meisten Fällen auf einer Hardware, die eine vergleichsweise geringere Leistungsfähigkeit besitzt (sog. Pico-Controller oder Einplatinenrechner wie Ardinao, Raspberry Pi etc.). Verschlüsselungstechniken für den gesamten Datenverkehr vom Agenten in die cloudbasierte Recheneinheit sind aber rechenintensiv. Das bedeutet, dass weniger Rechenleistung für andere notwendige Aktivitäten, wie beispielsweise die Datensammlung und die Vorverarbeitung der Daten zur Verfügung steht. Wenn die Agentensoftware auf der Hardware der Feldgeräte beispielsweise auf einem Umrichter läuft und damit die Ressourcen des Feldgerätes nutzt, steht vielfach auch nicht genügend Rechenleistung zur Verfügung, da die Hardware der Feldgeräte i.d.R. hinsichtlich der Leistungsfähigkeit auf ihre originären Aufgaben angepasst ist und insofern auch diese Aufgaben nur wenig Leistungsreserven zurücklassen. Sofern Agenten auf batteriebetriebenen Geräten installiert sind, führt die zusätzliche Rechenleistung der Agenten zu einer noch schnelleren Entladung der Batterien.
Auf der anderen Seite erfordern sicherer Übertragungskanäle zwischen dem Agenten und der cloudbasierten Recheneinheit bei gleicher Übertragungsgeschwindigkeit auch vergleichsweise höhere Bandbreiten, da Verschlüsselungsprotokolle sichere Netzwerksitzungen initiieren, was den Umfang der in Summe auszutauschenden Daten durch den sog. Overhead deutlich erhöht (z.B. durch Zertifikate). Diese Bilanz verschlechtert sich noch mal, wenn die sicheren Kommunikationssitzung viele Male und immer wieder neu aufgebaut werden müssen, da gerade der Aufbau der Kommunikation hohe Overheads produziert. Andere IoT-Geräte können Agenten besitzen, die mobile Kommunikationskanäle (z.B. GSM, GPRS, EDGE, UMTS) für den Datenaustausch nutzen. In diesem Fall können Kosten abhängig sein von der Menge der tatsächlich übertragenen Daten, was dazu führen kann, dass die Verwendung von sicheren Kommunikationskanälen für alle zu übertragenen Daten vergleichsweise teuer und/oder langsam sein kann.

Typischerweise wird dem Problem dadurch begegnet, dass hoch leistungsfähige Hardware verwendet wird und die notwendigen Bandbreiten zur Verfügung gestellt werden. Das Problem der Overheads für eine sicherer Kommunikation auf kleinen IoT-Geräten ist zwar erkannt, aber wird aber nicht wirklich adressiert.

Ausgehend von der vorbeschriebenen Problematik ist es demnach Aufgabe der Erfindung ein Verfahren anzugeben, welches die geforderte Sicherheit bei der Datenübertragung bei reduziertem Aufwand in der Verschlüsselung gewährleistet.

Die Aufgabe wird gelöst durch ein System mit den Merkmalen des Anspruchs 1 und ein Verfahren mit den Merkmalen des Anspruchs 7.

Das erfindungsgemäße System ist zur Übertragung von Daten wenigstens eines Objektes eingerichtet und umfasst eine dem Objekt zugeordnete Recheneinheit. Unter dem Begriff Objekt ist in diesem Zusammenhang eine Feldkomponenten zu verstehen, die über Ein-/Ausgabeschnittstellen insbesondere mit einem industriellen Prozess verbunden sind. Die Feldkomponenten empfangen Daten von Sensoren und können i.d.R. über Wirkverbindungen steuernd auf den Prozess wirken. Ein Objekt kann aber auch ein Gerät sein, welches selbst Sensor- und/oder Steuerkomponenten umfassen und insoweit autark arbeitet. Diesem Objekt ist eine lokale Recheneinheit zugeordnet. In der Regel ist die Recheneinheit in das Objekt integriert und jedes Objekt weist seine eigene Recheneinheit auf. In anderen Fällen kann eine Recheneinheit auch mehreren Objekten zugeordnet sein. Die lokale Recheneinheit weist Datenspeicher, Auswerteeinheit und wenigstens eine Applikation auf, wobei die Applikation die Auswerteeinheit veranlasst die Daten des Objektes in den Datenspeicher abzulegen. Die Daten des Objektes umfassen dabei sog. Rohdaten vom Objekt, beispielsweise Sensordaten vom Prozess oder der Sensorperipherie. Die Daten des Objektes sollen aber auch Daten umfassen, die von der Applikation aus den Sensordaten gewonnen sein können, beispielsweise abgeleitete Zwischengrößen oder Steuerbefehle.
Weiter umfasst das System einen Softwareagenten, der die Daten der Datenspeicher sammelt und über eine Datenverbindung (insbesondere basierend auf dem Internetprotokoll) an eine externe Recheneinheit überträgt. Der Softwareagent weist ein Klassifizierungsmodul auf, welches die Daten sensible und nicht sensible Daten klassifiziert. Die Daten der sensiblen Klasse werden unter Nutzung eines Verschlüsselungsalgorithmus an die externe Recheneinheit übertragen und die Daten der nicht sensiblen Klasse werden unverschlüsselt an die externe Recheneinheit übertragen. Die Unterteilung in sensible und nicht-sensible Daten erfolgt regelbasiert, wobei eine Reihe unterschiedlicher Regeln definiert und im Softwareagenten als Anweisung abgelegt sein können. Beispielsweise umfasst ein Überwachungsfall für das Objekt einer industriellen Maschine sog. Asset-Informationen wie Maschinentyp, Maschinenkennzeichnung, Maschinenort, Netzwerkinformationen (Adressen) und/oder Maschinenkonfigurationsdaten usw. Daneben umfasst der Überwachungsfall natürlich auch Überwachungsdaten wie Zeitreihen von Temperaturdaten oder Vibrationsdaten. In einem solchen Falle könnten die Asset-Informationen als sensible Daten klassifiziert werden, während die Überwachungsdaten als nicht sensible Daten klassifiziert sind. Eine Zuordnung der Überwachungsdaten zum Objekt selbst durch Dritte wäre dann ausgeschlossen und somit der notwendige Grad der Sicherheit in der Übertragung gewährleistet. In einer Produktionsanlage wiederum könnten Daten hinsichtlich der Produktionsausstoßes (Einheiten produziert pro Zeiteinheit) sensible Daten sein, während Maschinenzykluszeiten selbst nicht sensible Daten darstellen können. In einer noch generelleren Aufteilung könnten Fehler oder Warnmeldungen sensible Daten sein, während normale Informationen nicht sensible sind. In anderen Anwendungsfällen wiederum könnten Metadaten sensible Daten sein, während der Rest der Daten schon nicht sensible Daten darstellen. Bei der Überwachung von Fahrzeugen könnten Ortsdaten sensible Daten darstellen, während die zugehörigen Geschwindigkeitsdaten nicht sensible Daten sind. Oder bei Überwachung von Objekten im Umfeld der Hausautomation könnten Daten zur Identifikationen eines Sensor oder der Typ des Sensors als sensible eingestuft sein im Gegensatz zu den vom Sensor gemessenen Temperaturen oder Durchflussmengen.

Wenn der Softwareagent als weitere Applikation auf der lokalen Recheneinheit läuft kann ohne weiteren Aufwand bezüglich Hardware auf die Daten der Datenspeicher zugegriffen werden. Kommunikationsschnittstellen der lokalen Recheneinheit können verwendet werden.

In vorteilhafter Ausgestaltung soll das Klassifikationsmodul die Daten der sensiblen Klasse weiter unterteilen und zwar in Klassen unterschiedlicher Verschlüsselungsgüte. Auf diese Weise kann beispielsweise eine Klasse entstehen die mit 256 Bit Verschlüsselung arbeitet und eine weitere Klasse, die mit 128 Bit Verschlüsselung arbeitet. Daten können auf diese Wiese verschlüsselt übertragen werden, wobei die Grad der Verschlüsselung dem Inhalt und der Schutzwürdigkeit der Daten angepasst ist.

In einer weiteren Ausgestaltung unterhält das Klassifikationsmodul maschinelle Lerntechnologien. D.h. die automatische Klassifikation basiert auf solcher maschinellen Lerntechnologie. Dabei lernt das Klassifikationsmodul in der Bewertung, ob es sich bei den Daten um sensible oder nicht sensible Daten handelt aufgrund von Beispielen bzw. Trainingsobjekten und kann nach Beendigung einer Lernphase Verallgemeinerungen vornehmen, indem bestimmte Gesetzmäßigkeiten aus den Lerndaten extrahiert werden, die dann auf zukünftige Daten angewendet eine Datenklassifikation erlauben. Solche Lerntechnologien sind aus anderen Bereichen unten Namen wie Entscheidungsbäume (decision tree), Stützvektormethode (SVM, Support Vector Machine) oder neuronale Netze etc. bekannt. Sie können als überwachtes Lernen oder unüberwachtes Lernen implementiert sein.

Die Aufgabe wird weiterhin gelöst durch ein Verfahren zur Übertragung von Daten eines Objektes an eine externe Recheneinheit aus einer dem Objekt zugeordneten lokalen Recheneinheit mittels eines Softwareagenten, der die Daten vom Objekt innerhalb der lokalen Recheneinheit sammelt und über das Internet an die externe Recheneinheit überträgt. Der Softwareagent teilt die Daten des Objektes nach sensitiven und nicht sensitiven Daten ein und überträgt die sensiblen Daten verschlüsselt an die externe Recheneinheit. Die nicht sensiblen Daten werden vom Softwareagenten unverschlüsselt an die externe Recheneinheit übertragen.

In einem weiteren Verfahrensschritt unterteilt der Softwareagent die sensitiven Daten des Objekts weiter überträgt die sensitiven Daten mit unterschiedlicher Verschlüsselungsgüte überträgt.

Die oben beschriebenen Eigenschaften, Merkmale und Vorteile dieser Erfindung sowie die Art und Weise, wie diese erreicht werden, werden in Verbindung mit den Figuren näher erläutert. Hierbei zeigen in schematischer Darstellung:
- Fig. 1: ein System bestehend aus mehreren Rechnereinheiten zur Analytik von Objekten in einer cloudbasierten Rechnereinheit;
- Fig. 2: die Funktion von Agenten und Klassifikationmodul

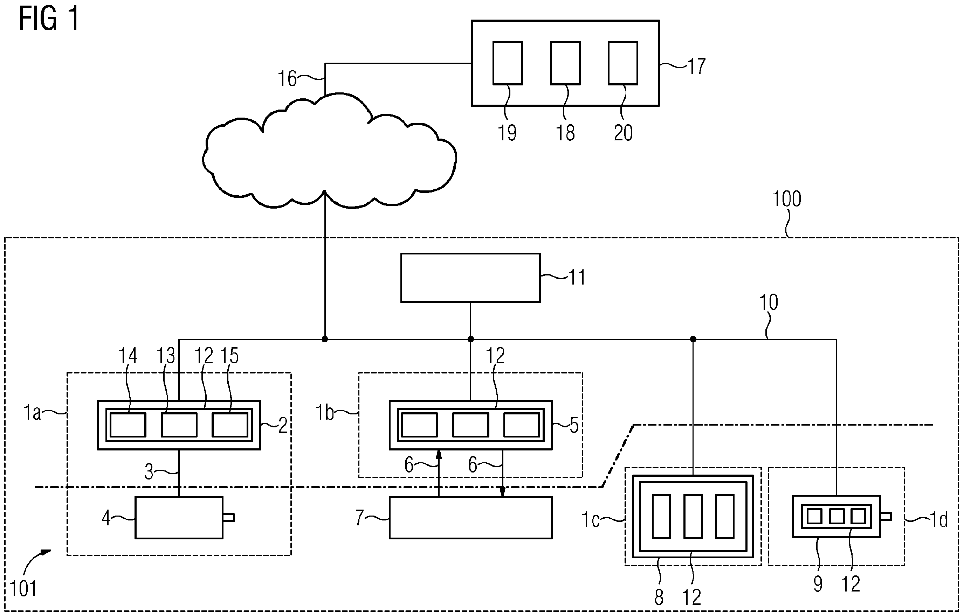

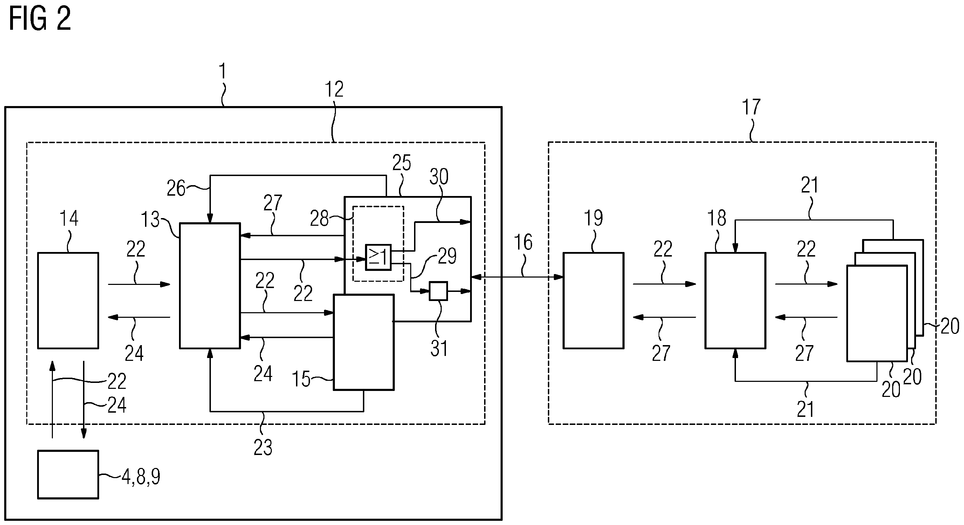

Fig. 1 zeigt ein System 100 zur Analytik von Objekten 1a bis 1d. Bei den Objekten handelt es sich um Automatisierungskomponenten in der Steuerungs- und Feldebene, wie sie beispielsweise in der Fabrikautomation bekannt sind. Das Objekt 1a zeigt einen von einem Umrichter 2 über die Steuerleitungen 3 angesteuerten Motor 4. Das Objekt 1b eine speicherprogrammierbare Steuerung 5, die in herkömmlicher Weise über digitale/analoge Ein-/Ausgänge 6 mit einer Prozessperipherie 7 verbunden ist. In einer weiteren Variante zeigt Objekt 1c ein intelligentes Feldgerät 8 und Objekt 1d einen intelligenten, direkt gesteuerten Motor 9. Die Objekte sind über ein lokales Kommunikationsnetzwerk 10 und in diesem Beispiel mit einer Steuerung 11 verbunden, welche übergeordnete Steuerungs- und Überwachungsfunktionen ausführt. Die Objekte 1a bis 1d liefern Objektdaten 22, das sind sowohl interne Objektdaten (gebildet, berechnet innerhalb des Objektes) sowie externe Objektdaten (Zustandsdaten aus der Prozessebene 101). Den Objekten sind Rechnereinheiten 12 zugeordnet, die die Verarbeitung der Objektdaten vornehmen, die Objekte überwachen, steuern oder regeln. Die Rechnereinheiten 12 sind dazu mit wenigstens einer Auswerteeinheit 13, Datenspeichern 14 und Applikationen 15 versehen. Über die Datenverbindung 16 sind Recheneinheiten 12 der Objekte mit einer anlagenexternen Rechnereinheit 17 verbunden und tauschen mit dieser Daten aus. Die Datenverbindung 16 wird bevorzugt über das Internet realisiert. Objekte, wie in Fig. 1 gezeigt, sind vom gleichen Systembetreiber, es können aber auch unterschiedliche Systembetreiber über das Internet mit der Rechnereinheit 17 verbunden sein und Objektdaten an diese senden. Die Rechnereinheit 17 weist eine Auswerteeinheit 18 und Datenspeicher 19 auf. Applikationen 20 wickeln die Verarbeitung der Objektdaten unter Zuhilfenahme von Auswerteeinrichtung 18 und Datenspeichern 19 ab. Die Applikationen 20 können komplexere Steuerung- und Regelungsfunktionen abbilden (beispielsweise in Simulationen), oder Analytiken, Historienuntersuchungen, Condition Monitoring etc. ausführen.
Ein Softwareagent 25 - dessen Funktion in Fig. 2 näher beschrieben ist, wird als Datensammler eingesetzt und sammelt und überträgt die Objektdaten 22 an die Rechnereinheit 17.

Fig. 2 zeigt schematisch das Handling der Daten in den Rechnereinheiten 12 und 17. Dabei sind dem Datenspeicher 14 Objektdaten 22 vom Objekt 1 (1a, 1b, 1c oder 1d) als Datenquelle zugegangen. Diese Daten können jedwede interne Objektdaten sein, wie beispielsweise Ströme oder Spannungen eines angeschlossenen Motors oder Zwischenkreisspannungen, oder -ströme des den Motor betreibenden Umrichters, intern für die Objekte berechnete Sollwertgrößen (insoweit auch Resultate 24). Diese Daten können aber auch Sensordaten externer Sensoren oder Aktoren bezüglich des Objektes und/oder des vom Objekt gesteuerten und/oder überwachten Prozesses sein. Je nach Ausführungsform können die Objektdaten kontinuierlich, periodisch, zeitgesteuert oder ereignisgesteuert an den Datenspeicher 14 übertragen werden. Der Datenspeicher 14 wechselwirkt mit der Auswerteeinheit 13. Die Auswerteeinheit 13 hat Zugriff auf den Datenspeicher 14 und kann von diesem Daten 22 anfordern bzw. abrufen. Die Auswerteeinheit 13 kann als Kombination aus Hardware und Software realisiert sein. In der hier beschriebenen Variante ist die Auswerteeinheit als eigenständige Rechnereinheit getrennt von den Datenspeichern 14 ausgestaltet. Über die Auswerteeinheit 13 werden Anfragen von verschiedenen Anwendungen bzw. Applikationen 15 verarbeitet. Die Applikationen 15 stellen dabei ein auf der Rechnereinheit 12 aufgeführtes Programm dar. Eine Applikation 15 veranlasst die Auswerteeinheit 13 Daten 22 des Datenspeichers 14 gemäß der in der Applikation 15 hinterlegten Anweisung 23 zu verarbeiten und die Resultate 24 dieser Verarbeitung an den Datenspeicher 14 zur Übermittlung an das Objekt 1 zu übertragen. Objekt 1 kann mittels dieser Resultate gesteuert bzw. beeinflusst werden. Ein Softwareagent 25 eines Servicebetreibers, der gemäß Fig. 2 als lauffähige Applikation innerhalb der Rechnereinheit 2 abläuft, veranlasst über Anweisungen 26 die Auswerteeinheit 13 die Objektdaten 22, 24 des Datenspeichers 14 über die Datenverbindung 16 an die anlagenexterne Rechnereinheit 17 zu verbringen. Die Rechnereinheit 17 weist Datenspeicher 19, eine Auswerteeinheit 18 und Applikationen 20 auf. Die Recheneinheit 17 kann Applikationen verschiedener Servicebetreiber umfassen. Die Applikation 20 weist die Auswerteeinheit 18 an Daten 22 des Datenspeichers 19 gemäß der in der Applikation 20 hinterlegten Anweisung 21 zu verarbeiten und die Resultate 27 im Datenspeicher 19 abzulegen. Über den Agenten 25 und die Datenverbindung 16 können Daten der Datenspeicher 19 an die Recheneinheit 12 gelangen. Agent 25 weist ein Klassifizierungsmodul 28 auf, welches eine Klassifizierung der Objektdaten 22, 24 in sensible Daten 29 und nicht sensible Daten 30 einteilt. Die sensiblen Daten 29 werden vor Datenübertragung über die Datenverbindung 16 über ein Verschlüsselungsalgorithmus 31 geführt und verschlüsselt übertragen, während die nicht sensiblen Daten 30 unverschlüsselt über die Datenverbindung 16 übertragen werden.

## Patentansprüche

1. System (100) zur Übertragung von Daten (22, 24) eines Objektes (1, 1a, 1b, 1c, 1d),
umfassend
- eine dem Objekt zugeordnete lokale Recheneinheit (12), welche Datenspeicher (14), Auswerteeinheit (13) und wenigstens eine Applikation (15) aufweist, wobei die Applikation die Auswerteeinheit veranlasst die Daten des Objektes in den Datenspeicher abzulegen und
- einen Softwareagenten (25), der Daten der Datenspeicher sammelt und über eine Datenverbindung (16) an eine externe Recheneinheit (17) überträgt,
**dadurch gekennzeichnet,**
**dass** es sich bei dem Objekt um eine Automatisierungskomponente in der Steuerungs- oder Feldebene handelt und das Objekt interne sowie externe Objektdaten liefert, wobei die internen Objektdaten innerhalb des Objekts berechnet werden und die externen Objektdaten Zustandsdaten aus der Prozessebene sind und der Softwareagent (25) ein Klassifizierungsmodul (28) aufweist, welches die Daten (22, 24) in sensible Daten (29) und nicht sensible Daten (30) klassifiziert, wobei die Daten der sensiblen Klasse unter Nutzung eines Verschlüsselungsalgorithmus (31) an die externe Recheneinheit übertragen werden und die Daten der nicht sensiblen Klasse unverschlüsselt an die externe Recheneinheit übertragen werden.

2. System nach Anspruch 1, **dadurch gekennzeichnet, dass** der Softwareagent (25) als eine weitere Applikation auf der lokalen Recheneinheit läuft.

3. System nach Anspruch 1, **dadurch gekennzeichnet, dass** der Softwareagent (25) auf eigener Hardware kommunikationstechnisch verbunden mit der lokalen Recheneinheit in einem lokalen Kommunikationsnetz läuft.

4. System nach Anspruch 2 oder 3, **dadurch gekennzeichnet, dass** das Klassifikationsmodul (28) die sensiblen Daten (29) weiter unterteilt in Klassen unterschiedlicher Verschlüsselungsgüte.

5. System nach Anspruch 2 oder 3, **dadurch gekennzeichnet, dass** das Klassifikationsmodul (28) maschinelle Lerntechnologien unterhält.

6. System nach Anspruch 5, **dadurch gekennzeichnet, dass** die maschinelle Lerntechnologie einen Entscheidungsbaum, eine Support Vector Machine oder ein neuronales Netz aufweist.

7. Verfahren zur Übertragung von Daten (22, 24) eines Objektes (1, 1a, 1b, 1c, 1d) an eine externe Recheneinheit (17) aus einer dem Objekt zugeordneten lokalen Recheneinheit (12) mittels eines Softwareagenten (25), der die Daten vom Objekt innerhalb der lokalen Recheneinheit sammelt und über eine Datenverbindung (16) an die externe Recheneinheit überträgt, wobei es sich bei dem Objekt um eine Automatisierungskomponente in der Steuerungs- und Feldebene handelt, welches Objekt interne sowie externe Objektdaten (22) liefert, wobei die internen Objektdaten innerhalb des Objekts berechnet werden und die externen Objektdaten Zustandsdaten aus der Prozessebene (101) sind, bei dem:
a) der Softwareagent die Daten des Objektes nach sensiblen Daten (29) und nicht sensiblen Daten (30) einteilt,
b) der Softwareagent die sensiblen Daten (29) verschlüsselt an die externe Recheneinheit überträgt,
c) der Softwareagent die nicht sensiblen Daten (30) unverschlüsselt an die externe Recheneinheit überträgt.

8. Verfahren nach Anspruch 7, **dadurch gekennzeichnet, dass** der Softwareagent (25) die sensiblen Daten (29) des Objekts (1, 1a, 1b, 1c, 1d) weiter unterteilt und die sensiblen Daten (29) mit unterschiedlicher Verschlüsselungsgüte überträgt.

9. Verfahren nach Anspruch 6, **dadurch gekennzeichnet, dass** die Einteilung nach Schritt a) auf maschinelle Lerntechnologien beruht.

## Claims

1. System (100) for transmitting data (22, 24) relating to an object (1, 1a, 1b, 1c, 1d), comprising
- a local computing unit (12) assigned to the object, having data memory (14), an evaluation unit (13) and at least one application (15), wherein the application causes the evaluation unit to store data relating to the object in the data memory, and
- a software agent (25) that collects the data memory data and transmits it to an external computing unit (17) via a data connection (16),
**characterised in that**
the object is an automation component in the control and field level and the object supplies internal and external object data, wherein the internal object data is calculated within the object and the external object data is status data from the process level, and the software agent (25) has a classification module (28) that classifies the data (22, 24) into sensitive data (29) and non-sensitive data (30), wherein the data in the sensitive class is transmitted to the external computing unit using an encryption algorithm (31), and the data in the non-sensitive class is transmitted to the external computing unit unencrypted.

2. System according to claim 1, **characterised in that** the software agent (25) runs as a further application on the local computing unit.

3. System according to claim 1, **characterised in that** the software agent (25) runs on dedicated hardware connected for communication purposes with the local computing unit in a local communications network.

4. System according to claim 2 or 3, **characterised in that** the classification module (28) further subdivides the sensitive data (29) into classes of different encryption levels.

5. System according to claim 2 or 3, **characterised in that** the classification module (28) supports machine learning technologies.

6. System according to claim 5, **characterised in that** the machine learning technology has a decision tree, a support vector machine, or a neural network.

7. Method for transmitting data (22, 24) relating to an object (1, 1a, 1b, 1c, 1d) to an external computing unit (17) from a local computing unit (12) assigned to the object, by means of a software agent (25) that collects the data from the object within the local computing unit and transmits it via a data connection (16) to the external computing unit, wherein the object is an automation component in the control and field level, said object supplying internal and external object data (22), wherein the internal object data is calculated within the object and the external object data is status data from the process level (101), in which:
a) the software agent divides the data relating to the object into sensitive data (29) and non-sensitive data (30),
b) the software agent transmits the sensitive data (29) to the external computing unit encrypted,
c) the software agent transmits the non-sensitive data (30) to the external computing unit unencrypted.

8. Method according to claim 7, **characterised in that** the software agent (25) further subdivides the sensitive data (29) relating to the object (1, 1a, 1b, 1c, 1d) and transmits the sensitive data (29) with different encryption levels.

9. Method according to claim 6, **characterised in that** the division according to step a) is based on machine learning technologies.

## Revendications

1. Système (100) de transmission de données (22, 24) d'un objet (1, 1a, 1b, 1c, 1d),
comprenant
- une unité (12) d'ordinateur locale, qui est associée à l'objet et qui a une mémoire (14) de données, une unité (13) d'exploitation et au moins une application (15), l'application faisant que l'unité d'exploitation met les données de l'objet dans la mémoire de données et
- un réactif (25) logiciel, qui collecte des données dans la mémoire de données et les transmet à une unité (17) d'ordinateur extérieure, par une liaison (16) de données, **caractérisé**
**en ce que** l'objet est un composant d'automatisation dans le plan de commande ou dans le plan sur site et l'objet fournit des données d'objet internes ainsi qu'externes, les données d'objet internes étant calculées au sein de l'objet et les données d'objet externes étant des données d'état provenant du plan de processus et le réactif (25) logiciel a un module (28) de classification, qui classe les données (22, 24) en données (29) sensibles et en données (30), qui ne sont pas sensibles, les données de la classe sensible étant, en utilisant un algorithme (31) de chiffrement, transmises à l'unité d'ordinateur externe et les données de la classe, qui n'est pas sensible, étant transmises sans chiffrement à l'unité d'ordinateur externe.

2. Système suivant la revendication 1, **caractérisé en ce que** le réactif (25) logiciel se déroule, sous la forme d'une autre application, sur l'unité d'ordinateur locale.

3. Système suivant la revendication 1, **caractérisé en ce que** le réactif (25) logiciel, relié en technique de communication par son propre matériel à l'unité d'ordinateur locale, fonctionne dans un réseau de communication local.

4. Système suivant la revendication 2 ou 3, **caractérisé en ce que** le module (28) de classification subdivise, en outre, les données (29) sensibles en classes de qualité de chiffrement différentes.

5. Système suivant la revendication 2 ou 3, **caractérisé en ce que** le module (28) de classification entretient des technologies d'apprentissage automatiques.

6. Système suivant la revendication 5, **caractérisé en ce que** la technique d'apprentissage automatique a un arbre de décision, une Support Vector Machine ou un réseau neuronal.

7. Procédé de transmission de données (22, 24) d'un objet (1, 1a, 1b, 1c, 1d) à une unité (17) d'ordinateur externe, à partir d'une unité (12) d'ordinateur local associée à l'objet, au moyen d'un réactif (25) logiciel, qui collecte les données de l'objet au sein de l'unité d'ordinateur locale et les transmet à l'unité d'ordinateur externe par une liaison (16) de données, l'objet étant un composant d'automatisation dans le champ de commande et dans le champ sur site, lequel objet fournit des données (22) d'objet, internes ainsi qu'externes, les données d'objet internes étant calculées au sein de l'objet et les données d'objet externes étant des données d'état provenant du plan (101) de processus, dans lequel :
a) le réactif logiciel partage les données de l'objet en données (29) sensibles et en données (30), qui ne sont pas sensibles,
b) le réactif logiciel transmet les données (29) sensibles, de manière chiffrée, à l'unité d'ordinateur externe,
c) le réactif logiciel transmet les données (30) sensibles, de manière non chiffrée, à l'unité d'ordinateur externe.

8. Procédé suivant la revendication 7, **caractérisé en ce que** le réactif (25) logiciel subdivise, en outre, les données (29) sensibles de l'objet (1, 1a, 1b, 1c, 1d) et transmet les données (29) sensibles avec des qualités de chiffrement différentes.

9. Procédé suivant la revendication 6, **caractérisé en ce que** le partage suivant le stade a) repose sur des technologies d'apprentissage automatiques.
